Europäisches Patentamt

European Patent Office

Office européen des brevets

(19)

(11) Veröffentlichungsnummer: **0 372 210**

**A1**

(12) ## EUROPÄISCHE PATENTANMELDUNG

(21) Anmeldenummer: 89119797.2

(22) Anmeldetag: 25.10.89

(51) Int. Cl.5: **C01F 7/02, C01F 7/44**

(30) Priorität: 03.12.88 DE 3840862

(43) Veröffentlichungstag der Anmeldung:
13.06.90 Patentblatt 90/24

(84) Benannte Vertragsstaaten:
AT BE CH DE ES FR GB GR IT LI LU NL SE

(71) Anmelder: **VEREINIGTE ALUMINIUM-WERKE
AKTIENGESELLSCHAFT**
**Georg-von-Boeselager-Strasse 25**
**D-5300 Bonn 1(DE)**

(72) Erfinder: **Brown, Neil, Dr.**
**Friedrichstrasse 43**
**D-5300 Bonn 1(DE)**

(74) Vertreter: **Müller-Wolff, Thomas, Dipl.-Ing.
c/o Vereinigte Aluminium-Werke AG
Patentabteilung Postfach 2468
D-5300 Bonn 1(DE)**

(54) **Verfahren zur Herstellung von Böhmit-Dispersionen.**

(57) Böhmit ist im allgemeinen von gelatinöser Natur, wenn die Suspension in wässrigem Medium hergestellt wird, und damit für viele Anwendung nicht mehr nutzbar.

Nach dem neuen Verfahren soll aus relativ billigen Grob-Al(OH)$_3$-Partikeln feinverteilter Böhmit hergestellt werden, der sich leicht in wässrige Dispersionen, die beim Stehen kein Gel bilden, umwandeln lässt.

Hierzu wird grobkörniges Al(OH)$_3$ auf eine Temperatur oberhalb 350° C erhitzt, das aktivierte Material mit erwärmter alkalischer oder saurer Lösung behandelt, um feinverteiltes Böhmit freizusetzen. Das Produkt hat eine spezifische Oberfläche von 30-70 m$^2$/g, eine Partikelgröße von 0,02 - 50 um, einen Na$_2$O-gehalt von 0,01-0,10 Gew.% und lässt sich leicht in wässrigem Medium dispergieren. Die resultierenden Suspensionen sind stabil und gelieren nicht.

Böhmitteilchen finden Anwendung in der Keramik-, Feuerfest, Papier- und Textilindustrie.

Bild 1
Eigenschaft der Mischung aus Böhmit in chi-Alumina
Löslichkeit g/l in Bayerdünnlauge (140 g/l Na$_2$Ofrei bei 85°C)

Glühverlust (%)

## Verfahren zur Herstellung von Böhmit-Dispersionen.

Die Erfindung betrifft ein Verfahren zur Herstellung von Dispersionen aus feinkristallinem Böhmit ($Al_2O_3 \cdot H_2O$).

Böhmitteilchen finden Anwendung in der Keramik-, Feuerfest-, Papier- und Textil-Industrie. Die Böhmitteilchen werden kommerziell hergestellt durch
- Hydrolyse von organischen Aluminium-Verbindungen (siehe z.B. US 2,636,865);
- Neutralisation wässriger Lösungen von Aluminiumsalzen (durch z.B. US 2,590,833);
- Hydrothermale Behandlungen von Aluminiumtrihydroxid bei hoher Temperatur und Dampfdruck (siehe z.B. US 4,117,105).

Es ist auch bekannt, daß nach diesem Verfahren hergestellter Böhmit im allgemeinen von gelatinöser Natur ist, wenn die Suspension in wäßrigem Medium hergestellt wird. In gelatinösem Zustand sind die Böhmitpartikel für die gewünschten Anwendungen nicht mehr nutzbar. Zahlreiche Methoden sind entwickelt worden, Böhmitdispersionen zu stabilisieren (siehe z.B. US 4,191,737).

Es ist daher die Aufgabe der vorliegenden Erfindung, ein Verfahren zur Herstellung von kristallinem Böhmit in Form von feinen Partikeln (die in wäßrigem Medium stabil sind und nicht gelieren) zu finden.

Die Aufgabe wird gelöst durch ein Verfahren zur Herstellung von im wesentlichen reinem Böhmit durch Erhitzen von grobkörnigem $Al(OH)_3$ auf eine Temperatur von etwa 400 °C, behandeln des aktivierten Materials mit erwärmter alkalischer oder saurer Lösung um fein verteiltes Böhmit freizusetzen. Das Produkt hat eine spezifische Oberfläche von 30-70 $m^2/g$, eine Partikelgröße von 0,01-0,50 $\mu$m, einen $Na_2O$-Gehalt von 0,01-0,10 Gew.-% und läßt sich leicht in wäßrigem Medium dispergieren. Die resultierenden Suspensionen sind stabil und gelieren nicht.

## AUSFÜHRLICHE BESCHREIBUNG DER ERFINDUNG

Das Verfahren zur Herstellung von kristallinem Böhmit gemäß der vorliegenden Erfindung beginnt mit den groben Hydrargillitteilchen aus dem Bayer-Verfahren und unterzieht diese einer leichten Kalzination (d.h. einer Erhitzung auf hohe Temperaturen, jedoch unter dem Schmelz- oder Verflüssigungspunkt, wobei ein teilweiser Feuchtigkeitsverlust eintritt). Dabei wandelt sich $Al(OH)_3$ zu Böhmit in einer Matrix aus chi-Alumina um.

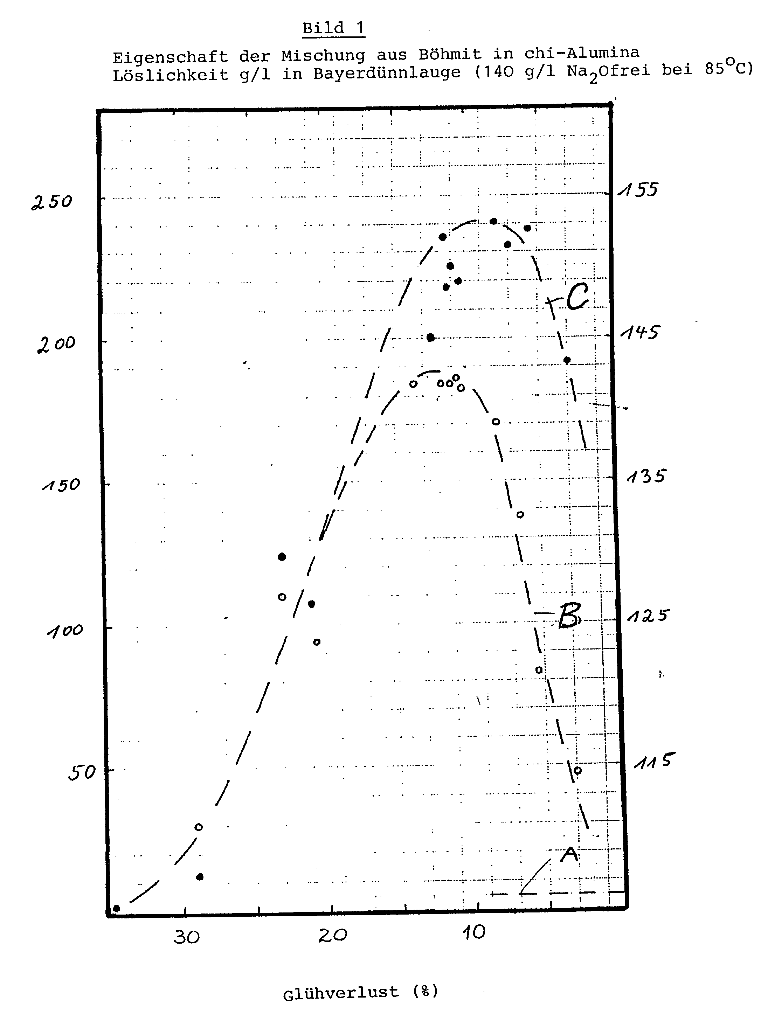

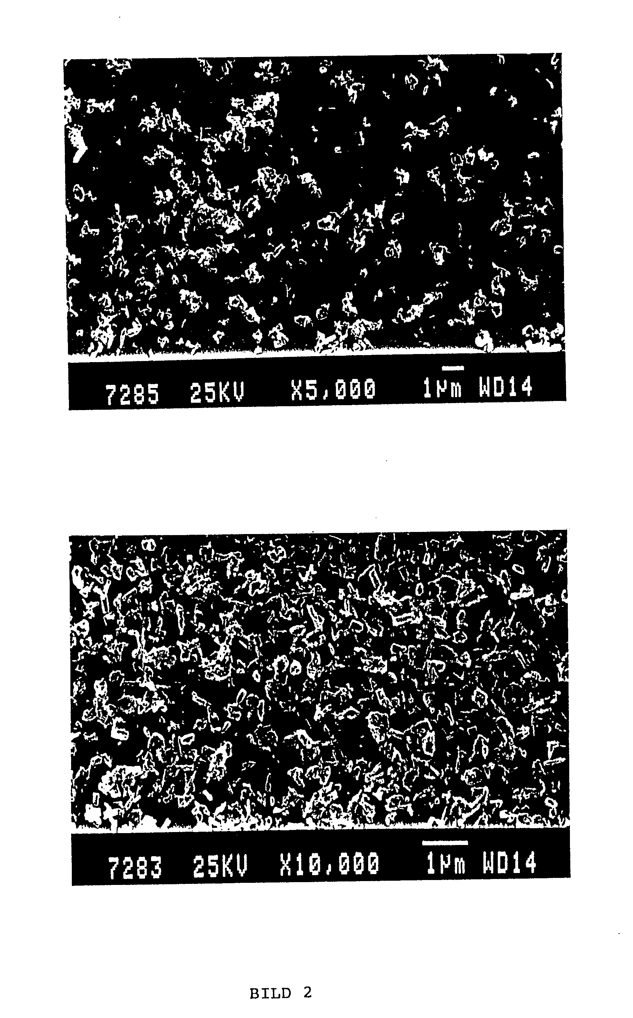

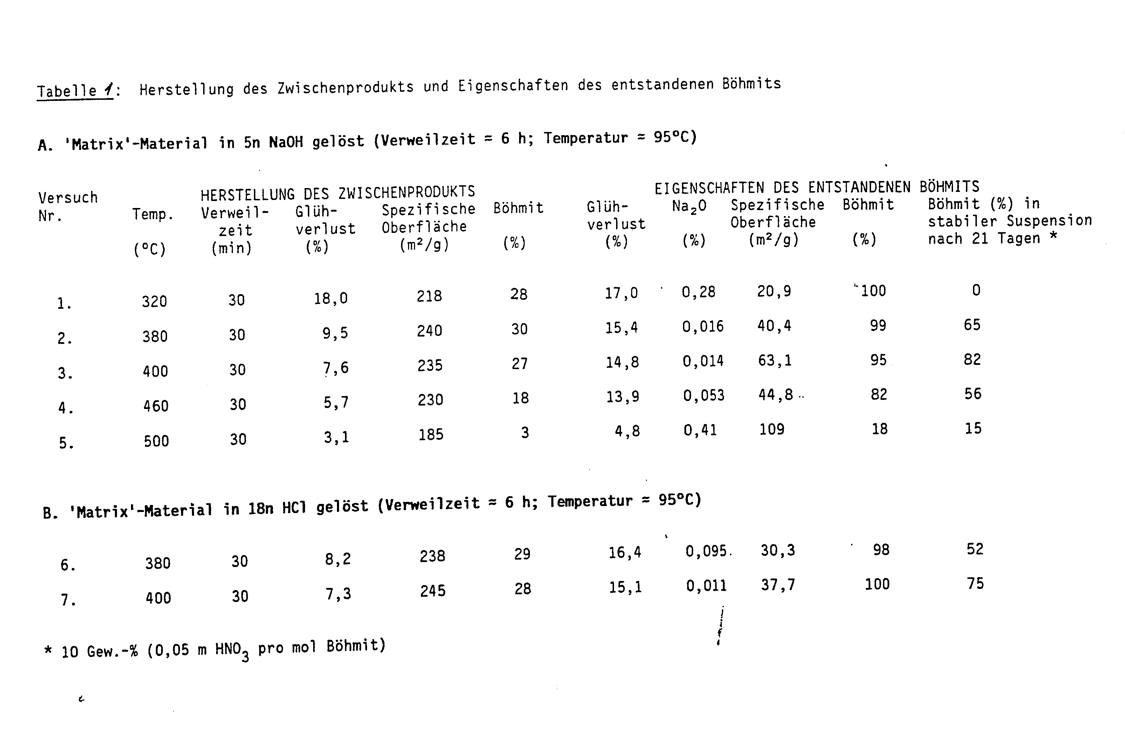

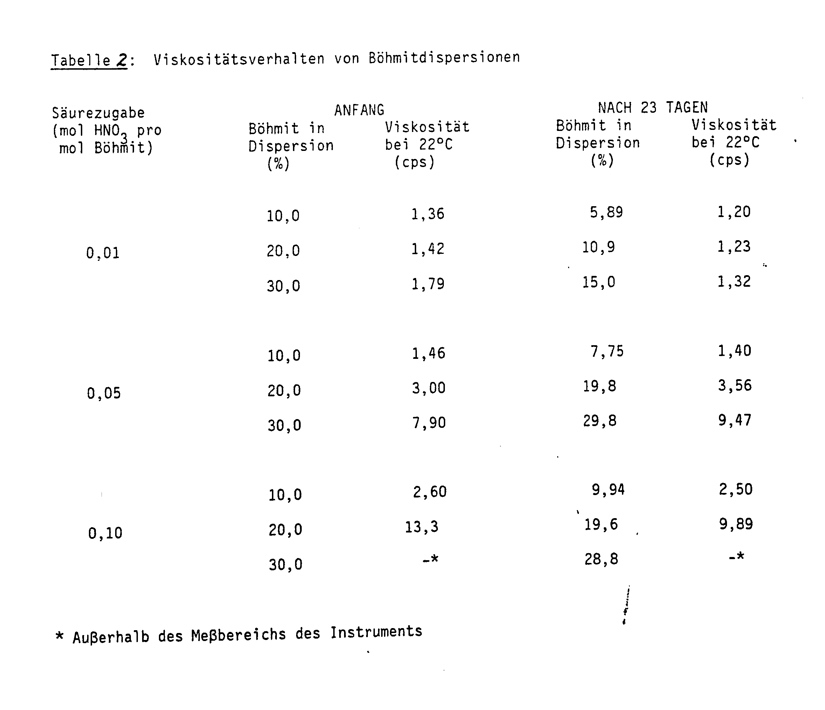

Wie bereits aus EP 0 278 469 bekannt, löst sich 105 g Hydrargillit in 1 l alkalische Aluminatlauge bei 85 °C auf (siehe Abbildung 1, A). Hydrargillit (Aluminiumtrihydroxid) aus dem Bayer-Verfahren, beispielsweise bestehend aus Hydrargillitteilchen (90 davon sind größer als 45 $\mu$m), wird einer leichten Kalzination unterworfen, typischerweise in einem Drehrohrofen bei verschiedenen Temperaturen im Bereich von 320-500 °C, jedoch vorzugsweise bei 400 °C (im Falle der Drehrohrofen-Kalzinierung), während einer Zeitspanne, die lang genug ist, um den Glühverlust des aktivierten Materials gemäß EP 0 278 469 auf weniger als 20 %, vorzugsweise 7-10%, zu senken. Je höher die Temperatur, desto kürzer ist die benötigte Verweilzeit. Bei ndiesen Bedingungen enthält das leicht kalzinierte Material etwa 28 % kristallinen Böhmit, wie durch Röntgen-Diffraktometer-Analyse bestimmt wird, welcher in einem Matrixmaterial eingebettet ist. Das aktivierte Matrixmaterial enthält wenig oder keinen Hydrargillit oder alpha-$Al_2O_3$, die beide keine erhöhte Löslichkeit in alkalischer Lauge besitzen. Für das aktivierte Matrixmaterial gemäß EP 0 278 469 ist eine um ca. 40 % erhöhte Löslichkeit charakteristisch (S. Bild 1, Kurve B).

Die vorliegende Erfindung behandelt die Umwandlung von Grobpartikeln $Al(OH)_3$ (90 % > 45 $\mu$m) in Feinpartikel von Böhmit mit einer duchschnittlichen Korngröße von 1-2 $\mu$m, einer spezifischen Oberfläche von 20-40 $m^2/g$ und einem $Na_2O$-Gehalt von 0,25-0,50 Gew.-%.

Die optimalen Bedingungen zur Herstellung dieses Böhmits zeigt Bild 1. Diese Bedingungen entsprechen etwa einer Wärmebehandlung des $Al(OH)_3$ bei 350 °C für 20 min und führen zu einem Maximum der '$Al_2O_3$-in-Lösung' Kurve B bei einem Glühverlust von 10-13 Gew.-%. Außerhalb des Maximums der Kurve B beginnt die Umwandlung von chi-$Al_2O_3$ zu einer Phase mit niedriger spezifischer Oberfläche und geringer Löslichkeit in Aluminatlauge.

Die vorliegende Methode bezieht sich auf das zweite Maximum der spezifischen Oberfläche in Bild 1, Kurve G. Es entspricht einem Glühverlust von 7-10%. Der Zuwachs der spezifischen Oberfläche zwischen den beiden Maxima ist vermutlich eine Folge physikalischer Veränderungen des Böhmits bei der Umwandlung zu gamma-$Al_2O_3$.

## VERSUCHSBESCHREIBUNG

Aluminiumhydroxid aus dem Bayer-Verfahren mit einer Teilchengröße von 90 % > 45 $\mu$m und einem Glühverlust von 35 % wurde in 7 Proben zu Testzwecken aufgeteilt. Es wurde eine Wärmebehandlung gemäß Tabelle 1, Nr. 1-7, durchgeführt.

In Auflösungsexperimenten (mit z.B. 5N NaOH und 18N HCl) wurden jeweils 50 g des kalzinierten Materials mit 300 ml Lösung behandelt. Die Versuche wurden in einem 800 ml-Becherglas (Magnetrührer) auf einer Heizplatte vorgenommen. Die Verweilzeit betrug 6 h bei 95 °C. Die nach Beendigung der Auflösungsversuche freigesetzten feinen Böhmitpartikel wurden abfiltriert und gewaschen und der Glühverlust, die spezifische Oberfläche, der Böhmitgehalt und die Gew.-% $Na_2O$ bestimmt. Zusätzlich wurde der Böhmit-Gehalt in einer stabilen Suspension nach 21 Tagen (Versuchsbedingungen: 10 Gew.-Vol % Böhmit in Suspension unter Zugabe von 0,05 mol $HNO_3$ pro mol Böhmit) ermittelt.

Tabelle 1 enthält die Ergebnisse dieser Versuche. Die Daten zeigen, daß die Böhmitteilchen im Material, welches bei 400 °C/30 min kalziniert wurde, bedeutend kleiner sind als Partikel eines Materials, welches bei 350 °C/30 min kalziniert wurde.

REM-Aufnahmen (Bild 2) bestätigen die Feinheit der Böhmitpartikel, gemäß Versuch 3:
Die maximale Korngröße beträgt 0,5 μm.
Werden diese Partikel mit 0,5 mol $HNO_3$ pro mol Böhmit suspendiert, verbleiben nach 21 Tagen 80 % in der Suspension.
Der extrem feinteilige Böhmit aus der Kalzinierung von Al(OH)₃ bei 400 °C/30 min besitzt vorteilhafte, sehr niedrige $Na_2O$-Gehalte von 0,01-0,02 Gew.-%. Sie kommen durch die Freisetzung von Alkali zustande, welches sonst an den inneren Oberflächen und Korngrenzen der größeren Partikel festgehalten wird.

Proben dieses Böhmits wurden in jeweils 100 ml destilliertem Wasser bei Feststoffgehalten von 10 bis 30 und Säuregehalten von 0.01 bis 0,10 mol $HNO_3$ pro mol Böhmit dispergiert. Nach 30 min Rührung wurden die Suspensions-Viskositäten mit einem Haake "Falling-Ball" Viskosimeter gemessen. Nach 23 Tagen ungestörter Standzeit der Suspensionen wurde ihr Böhmitgehalt nach Abdekantierung von Bodensediment bestimmt. Die Ergebnisse (siehe Tabelle 2) zeigen, daß es für jeden Feststoffgehalt ein Minimum an Säuregehalt gibt, bei welchem praktisch alle Böhmitpartikel dispergiert bleiben. Keine der Dispersionen verwandelte sich in 23 Tagen in ein Gel. Hätte eine Gelbildung stattgefunden, wäre es nicht möglich gewesen, die Dispersionen abzudekantieren.

Mit dem vorliegenden Verfahren kann aus relativ billigen Grob-Al(OH)₃-Partikeln feinverteilter Böhmit hergestellt werden, welcher sich leicht in wäßrige Dispersionen, die beim Stehen kein Gel bilden, umwandeln läßt. Für solche Böhmitdispersionen bietet sich eine Reihe von Anwendungen an:
- Binder für feuerfeste Materialien und Keramik
- Behandlung von Papieroberflächen zur Aufrauhung
- Antistatische und Antischmutz-Ausrüstung von Textilmaterialien
- als Dispersionsmittel für Teppich-Shampoon.

Der niedrige $Na_2O$-Gehalt des Böhmits ist von besonderem Vorteil bei Verwendung in der Keramik.

Erläuterung zu Bild 1:

Eigenschaften der Mischung aus Böhmit in chi-Alumina
● spezifische Oberfläche in m²/g
O $Al_2O_3$ in Lösung (g/l), die 140 g/l $Na_2O$-frei bei 85 °C aufweist (Bayerdünnlauge)
A: Hydrargillit-Löslichkeit bei 85 °C in obiger Bayerdünnlauge
Die BET-Oberfläche wurde nach DIN 66 132 (Einpunktverfahren) wie folgt ermittelt:
    (a) Vorbehandlung der Probe:
Temperatur des Vortrocknens - 110 °C
Dauer des Vortrocknens - 3 h
Verwendung von Stickstoff und Vakuum dann gemessen
    (b) Messbedingungen:
Atmosphärendruck
Raumtemperatur des Wasserbades während der Messung Zeit vom Eintauchen der Adsorptionsgefäße in das Kältebad bis zur Ablesung der Druckdifferenz - 1 min
    (c) Abgelesene Höhendifferenz am Druckdifferenzmesser -100-200 mm
    (d) spezifische Oberfläche der Probe, gegebenenfalls als Mittelwert mit Streuung z.B. 50 ± 1 m²/g.

**Ansprüche**

1. Verfahren zur Herstellung von im wesentlichen reinen Böhmit-Dispersionen, dadurch gekennzeichnet, daß die Böhmitpartikel eine spezifische Oberfläche von 30-70 m²/g, eine Partikelgröße von 0,02-0,50 μm und einen $Na_2O$-Gehalt von 0,01-0,10 Gew.-% enthalten, umfassend die folgenden Stufen:
    (a) Wärmebehandlung eines grobkörnigen Aluminiumhydroxids bei Temperaturen oberhalb 350 °C, bis ein Glühverlust von 7-10 Gew.-% erreicht ist und eine Mischung von Böhmit in einer Matrix aus chi-Alumina entsteht;
    (b) die Mischung wird in Alkali oder Säure eingegeben, das chi-Alumina aufgelöst und fein verteilter Böhmit freigesetzt;
    (c) die freigesetzten feinen Böhmitpartikel werden filtriert, gewaschen und unter Zugabe eines Dispersionsmittels dispergiert.

2. Verfahren nach Anspruch 1, dadurch gekennzeichnet, daß die Matrix aus chi-Alumina im wesentlichen frei von Hydrargillit, gamma-Aluminiumoxid und alpha-Aluminiumoxid ist.

3. Verfahren nach einem der vorhergehenden Ansprüche, dadurch gekennzeichnet, daß die Auflösung des Matrixmaterials bei Temperaturen zwischen 60 und 120 °C durchgeführt wird.

4. Verfahren nach einem der vorhergehenden Ansprüche, dadurch gekennzeichnet, daß zur Auflösung des Matrixmaterials eine reine alkalische Aluminatlauge, Alkali, Mineral-Säure oder Salz der entsprechenden Mineral-Säure verwendet wird.

5. Verfahren nach einem der vorhergehenden Ansprüche, dadurch gekennzeichnet, daß die Böhmitpartikel in wäßriger Säure bei Säuregehalten von mindestens 0,01 mol Univalent-Säure pro mol Böhmit dispergiert wird.

6. Verfahren nach einem der vorhergehenden Ansprüche, dadurch gekennzeichnet, daß Salpeter-, Salz-, Essig- oder Ameisensäure zur Dispergierung verwendet wird.

7. Verfahren nach einem der vorhergehenden Ansprüche, dadurch gekennzeichnet, daß die Teilchen des Aluminiumhydroxids zu mehr als 50 % größer als 45 μm sind.

## Bild 1

Eigenschaft der Mischung aus Böhmit in chi-Alumina
Löslichkeit g/l in Bayerdünnlauge (140 g/l $Na_2O$frei bei 85°C)

Glühverlust (%)

7285 25KV X5,000 1Pm WD14

7283 25KV X10,000 1Pm WD14

BILD 2

Tabelle 1: Herstellung des Zwischenprodukts und Eigenschaften des entstandenen Böhmits

A. 'Matrix'-Material in 5n NaOH gelöst (Verweilzeit = 6 h; Temperatur = 95°C)

| Versuch Nr. | Temp. (°C) | HERSTELLUNG DES ZWISCHENPRODUKTS | | | | EIGENSCHAFTEN DES ENTSTANDENEN BÖHMITS | | | | |
| | | Verweilzeit (min) | Glühverlust (%) | Spezifische Oberfläche (m²/g) | Böhmit (%) | Glühverlust (%) | $Na_2O$ (%) | Spezifische Oberfläche (m²/g) | Böhmit (%) | Böhmit (%) in stabiler Suspension nach 21 Tagen * |
|---|---|---|---|---|---|---|---|---|---|---|
| 1. | 320 | 30 | 18,0 | 218 | 28 | 17,0 | 0,28 | 20,9 | 100 | 0 |
| 2. | 380 | 30 | 9,5 | 240 | 30 | 15,4 | 0,016 | 40,4 | 99 | 65 |
| 3. | 400 | 30 | 7,6 | 235 | 27 | 14,8 | 0,014 | 63,1 | 95 | 82 |
| 4. | 460 | 30 | 5,7 | 230 | 18 | 13,9 | 0,053 | 44,8 | 82 | 56 |
| 5. | 500 | 30 | 3,1 | 185 | 3 | 4,8 | 0,41 | 109 | 18 | 15 |

B. 'Matrix'-Material in 18n HCl gelöst (Verweilzeit = 6 h; Temperatur = 95°C)

| Versuch Nr. | Temp. (°C) | Verweilzeit (min) | Glühverlust (%) | Spezifische Oberfläche (m²/g) | Böhmit (%) | Glühverlust (%) | $Na_2O$ (%) | Spezifische Oberfläche (m²/g) | Böhmit (%) | Böhmit (%) in stabiler Suspension nach 21 Tagen * |
|---|---|---|---|---|---|---|---|---|---|---|
| 6. | 380 | 30 | 8,2 | 238 | 29 | 16,4 | 0,095 | 30,3 | 98 | 52 |
| 7. | 400 | 30 | 7,3 | 245 | 28 | 15,1 | 0,011 | 37,7 | 100 | 75 |

* 10 Gew.-% (0,05 m $HNO_3$ pro mol Böhmit)

EP 0 372 210 A1

Tabelle 2: Viskositätsverhalten von Böhmitdispersionen

| Säurezugabe (mol $HNO_3$ pro mol Böhmit) | ANFANG | | NACH 23 TAGEN | |
| --- | --- | --- | --- | --- |
| | Böhmit in Dispersion (%) | Viskosität bei 22°C (cps) | Böhmit in Dispersion (%) | Viskosität bei 22°C (cps) |
| | 10,0 | 1,36 | 5,89 | 1,20 |
| 0,01 | 20,0 | 1,42 | 10,9 | 1,23 |
| | 30,0 | 1,79 | 15,0 | 1,32 |
| | 10,0 | 1,46 | 7,75 | 1,40 |
| 0,05 | 20,0 | 3,00 | 19,8 | 3,56 |
| | 30,0 | 7,90 | 29,8 | 9,47 |
| | 10,0 | 2,60 | 9,94 | 2,50 |
| 0,10 | 20,0 | 13,3 | 19,6 | 9,89 |
| | 30,0 | -* | 28,8 | -* |

* Außerhalb des Meßbereichs des Instruments

EP 0 372 210 A1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | EP-A-0 278 469 (VEREINIGTE ALUMINIUM-WERKE AG) * Ansprüche 1,2,4,5,7-9 * --- | 1-4 | C 01 F 7/02 C 01 F 7/44 |
| A | EP-A-0 116 436 (ALCAN INTERNATIONAL LTD.) * Ansprüche 5-9 * --- | 1 | |
| A | DE-B-1 592 158 (RHONE-PROGIL S.A.) * Anspruch 1 * --- | 1 | |
| A | EP-A-0 015 196 (RHONE-POULENC INDUSTRIES) * Ansprüche 1,5 * --- | 1 | |
| A | WO-A-8 001 799 (ALUMINIUM PECHINEY) * Anspruch 1 * --- | 1 | |
| A,D | US-A-4 191 737 (J.L. IRVINE) * Anspruch 1 * ----- | 1 | |

**RECHERCHIERTE SACHGEBIETE (Int. Cl.5)**

C 01 F 7/02
C 01 F 7/44

Der vorliegende Recherchenbericht wurde für alle Patentansprüche erstellt

| Recherchenort | Abschlußdatum der Recherche | Prüfer |
|---|---|---|
| BERLIN | 04-12-1989 | CLEMENT J.P. |